# FASCICULE DE BREVET EUROPEEN

(11) **EP 0 701 976 B1**
(45) Date de publication et mention de la délivrance du brevet: **05.11.1997**
(21) Numéro de dépôt: 95810555.3
(22) Date de dépôt: 06.09.1995
(51) Int. Cl.: C03C 3/095

(54) **Verre transparent**
Durchsichtiges Glas
Transparent glass

(30) Priorité: 16.09.1994 FR 9411055
(43) Date de publication de la demande: 20.03.1996
(73) Titulaire: Favrot, Guy A., 8955 Oetwil an der Limmat (CH); Truyol, Albert, 92429 Vaucresson (FR)
(72) Inventeur: Favrot, Guy A., 8955 Oetwil an der Limmat (CH); Truyol, Albert, 92429 Vaucresson (FR)
(74) Mandataire: Meylan, Robert Maurice

(56) Documents cités:
- EP-A- 0 505 061
- GB-A- 2 115 403
- PATENT ABSTRACTS OF JAPAN vol. 18 no. 288 (C-1207) ,2 Juin 1994 & JP-A-06 056467 (NIPPON ELECTRIC GLASS CO LTD) 1 Mars 1994,
- PATENT ABSTRACTS OF JAPAN vol. 17 no. 37 (C-1019) ,25 Janvier 1993 & JP-A-04 254435 (NIPPON ELECTRIC GLASS CO LTD) 9 Septembre 1992,
- PATENT ABSTRACTS OF JAPAN vol. 15 no. 177 (C-829) ,7 Mai 1991 & JP-A-03 040938 (NIPPON SHEET GLASS CO LTD) 21 Février 1991,

## Description

La présente invention a pour objet un nouveau verre transparent obtenu à partir d'un mélange d'oxydes.

Un verre transparent de qualité, c'est-à-dire présentant une bonne résistance, est constitué de silice et d'un certain nombre d'oxydes. Un tel verre peut par exemple présenter la composition suivante, les chiffres représentant des valeurs en pourcent du poids total :

| | |
|---|---|
| SiO₂ | 71 |
| B₂O₃ | 0,3 |
| Na₂ | 13,5 |
| K₂ | 0,3 |
| Li₂O | 0,1 |
| CaO | 9,5 |
| MgO | 0,9 |
| BaO | 1,1 |
| ZnO | 0,3 |
| Al₂O₃ | 2,3 |
| TiO₂ | 0,03 |
| Fe₂O₃ | 0,02 |
| SO₃ | 0,15 |
| CeO₂ | 0,10 |

L'invention a pour but d'augmenter la résistance du verre à la rupture.

A cet effet on a tout d'abord songé à augmenter la proportion d'oxyde de titane. Or, selon l'homme de l'art, c'est-à-dire les verriers, une augmentation de la proportion d'oxyde de titane de 0,03% à 0,08% par exemple, devait forcément amener le verre à "trancher" c'est-à-dire à devenir translucide ou opaque ou tout au moins présenter des taches. Or, contrairement à ce préjugé, il s'est avéré que la proportion d'oxyde de titane pouvait être augmentée beaucoup plus sans que le verre tranche.

On a par ailleurs augmenté très sensiblement la proportion d'oxyde de magnésium et ajouté de l'oxyde de zirconium, dans la proportion d'environ 1%, oxyde qui n'avait pas été utilisé jusqu'ici. Par ces mesures, il a été possible d'obtenir un verre parfaitement transparent dont la résistance à la rupture est d'environ 1,5 fois supérieure à celle des verres connus.

Le verre selon l'invention est caractérisé en ce qu'il est obtenu à partir d'un mélange d'oxydes présentant la composition suivante, exprimée en pourcent du poids total :

| | |
|---|---|
| SiO₂ | 65 à 73 |
| B₂O₃ | 5 à 8 |
| Na₂O | 4 à 8 |
| K₂O | 0,2 à 0,7 |
| Li₂O | 1,5 à 2,5 |
| CaO | 5 à 8 |
| MgO | 2 à 5 |
| ZnO | 1,2 à 3 |
| Al₂O₃ | 2,5 à 4 |
| TiO₂ | 0,3 à 0,8 |
| ZrO₂ | 1,1 à 2,5 |
| Fe₂O₃ | 0,01 à 0,03 |
| SO₃ ou anion équivalent | 0,15 à 0,30 |
| CeO₂ | 0,1 à 0,2 |

Ces compositions ont prouvé qu'elles évitaient un "démixage" du verre.

### Exemple

Un verre a été réalisé à partir de la composition suivante, toujours exprimée en pourcent du poids total :

| | |
|---|---|
| SiO₂ | 70,30 |
| B₂O₃ | 5,00 |
| Na₂O | 6,10 |
| K₂O | 0,4 |
| Li₂O | 2,1 |
| CaO | 8,7 |
| MgO | 3,3 |
| ZnO | 1,1 |
| Al₂O₃ | 3,4 |
| TiO₂ | 0,4 |
| ZrO₂ | 1,1 |
| Fe₂O₃ | 0,01 |
| SO₃ | 0,20 |
| CeO₂ | 0,1 |

On remarquera l'absence d'oxyde de baryum présent dans la proportion de 1,1% dans le verre de base du verrier.

Une série de mesures de rupture a été effectuée selon le mode ISO 5014 avec des éprouvettes de 120 x 20 x 10 mm. Pour le module de rupture, les mesures ont donné une valeur moyenne de 79,0 MPa. Les mêmes mesures exécutées avec un verre obtenu par la préparation selon l'art antérieur définie dans l'introduction ont donné une valeur moyenne de 51,3 MPa. L'augmentation de la résistance à la rupture est donc de l'ordre de 54%.

Les mesures ont été menées au laboratoire d'essai de la Société Française de Céramique. Les déterminations des modules des différents verres testés ont été réalisées en flexion trois points sur une presse de 10 kN avec une précision de l'ordre de 0,1 N et une montée en charge de 150 MPa par mn.

Cette augmentation de résistance permet soit de réaliser des verres plus résistants, notamment des verres à vitres, soit de réaliser des verres plus minces présentant la même résistance que les verres actuels, ce qui permet par exemple de confectionner des bouteilles plus minces et par conséquent plus légères. Un tel gain de poids constitue non seulement une économie de matière à la fabrication, mais surtout une économie de poids lors de la manutention et du transport, ce qui se traduit par une importante économie d'énergie. Cette économie se retrouvera dans tous les conditionnements en verre pour lesquels il n'y a pas lieu d'augmenter la résistance, par exemple en parfumerie.

Le SO₃ peut être remplacé par un anion équivalent tel que NO₃, PO₃, PO₄, ClO, dans la mesure de leur stabilité physico-chimique autorisée.

## Revendications

1. Verre transparent obtenu à partir d'un mélange d'oxydes, caractérisé en ce que le mélange d'oxydes présente la composition suivante, exprimée en pourcent du poids total :
| | |
|---|---|
| SiO₂ | 65 à 73 |
| B₂O₃ | 5 à 8 |
| Na₂O | 4 à 8 |
| K₂O | 0,2 à 0,7 |
| Li₂O | 1,5 à 2,5 |
| CaO | 5 à 8 |
| MgO | 2 à 5 |
| ZnO | 1,2 à 3 |
| Al₂O₃ | 2,5 à 4 |
| TiO₂ | 0,3 à 0,8 |
| ZrO₂ | 1,1 à 2,5 |
| Fe₂O₃ | 0,01 à 0,03 |
| SO₃ ou anion équivalent | 0,15 à 0,30 |
| CeO₂ | 0,1 à 0,2 |

## Claims

1. A transparent glass obtained from a mixture of oxides, characterized in that the mixture of oxides has the following composition, expressed as a percentage of the total weight :
| | |
|---|---|
| SiO₂ | 65 to 73 |
| B₂O₃ | 5 to 8 |
| Na₂O | 4 to 8 |
| K₂O | 0,2 to 0,7 |
| Li₂O | 1,5 to 2,5 |
| CaO | 5 to 8 |
| MgO | 2 to 5 |
| ZnO | 1,2 to 3 |
| Al₂O₃ | 2,5 to 4 |
| TiO₂ | 0,3 to 0,8 |
| ZrO₂ | 1,1 to 2,5 |
| Fe₂O₃ | 0,01 to 0,03 |
| SO₃ or equivalent anion | 0,15 to 0,30 |
| CeO₂ | 0,1 to 0,2 |

## Patentansprüche

1. Durchsichtiges Glas, das aus einer Oxid-Mischung erhalten wurde, dadurch gekennzeichnet, dass diese Oxid-Mischung die folgende Zusammensetzung, ausgedrückt in Prozenten des Gesamtgewichts, aufweist :
| | |
|---|---|
| SiO₂ | 65 bis 73 |
| B₂O₃ | 5 bis 8 |
| Na₂O | 4 bis 8 |
| K₂O | 0,2 bis 0,7 |
| Li₂O | 1,5 bis 2,5 |
| CaO | 5 bis 8 |
| MgO | 2 bis 5 |
| Zno | 1,2 bis 3 |
| Al₂O₃ | 2,5 bis 4 |
| TiO₂ | 0,3 bis 0,8 |
| ZrO₂ | 1,1 bis 2,5 |
| Fe₂O₃ | 0,01 bis 0,03 |
| SO₃ oder äquivalentes Anion | 0,15 bis 0,30 |
| CeO₂ | 0,1 bis 0,2 |
